(19)

Europäisches
Patentamt
European
Patent Office
Office européen
des brevets

(11) **EP 2 306 401 A1**

(12) **EUROPEAN PATENT APPLICATION**

(43) Date of publication:
06.04.2011 Bulletin 2011/14

(51) Int Cl.:
$G06T\ 7/20$ (2006.01)   $H04N\ 7/01$ (2006.01)
$H04N\ 7/26$ (2006.01)

(21) Application number: 10164380.7

(22) Date of filing: 28.05.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 27.08.2009 KR 20090079551

(71) Applicant: SAMSUNG ELECTRONICS CO., LTD.
Suwon-si,
Gyeonggi-do (KR)

(72) Inventors:
• WANG, Yonggang
  100088 Beijing (CN)
• HAN, Seung-hoon
  Seocho-gu
  Seoul (KR)

(74) Representative: Hewett, Jonathan Michael
  Richard
  Venner Shipley LLP
  20 Little Britain
  London EC1A 7DH (GB)

(54) **Motion estimating method and image processing apparatus**

(57) Disclosed are a motion estimating method for an image and an image processing apparatus. A motion estimating method of an image, the method including: calculating a candidate motion vector by using one of a forward motion estimation and a backward motion estimation from a reference block extracted from one of first and second images that are input consecutively, and a search area extracted from the other one of the first and second images; calculating a pseudo motion vector corresponding to the other one of the forward motion estimation and the backward motion estimation by using the candidate motion vector; and interpolating the first and second images by using at least one of the candidate motion vector and the pseudo motion vector.

FIG. 1

EP 2 306 401 A1

Printed by Jouve, 75001 PARIS (FR)

**EP 2 306 401 A1**

**Description**

The present invention relates to a motion estimating method for an image and an image processing apparatus, and more particularly, to a motion estimating method for an image and an image processing apparatus which performs a unidirectional (i.e. either forward or backward) motion estimation.

An image processing operation which converts a frame rate or converts an interlaced image into a progressive image is accompanied by a motion estimation operation between image frames.

The image estimation technique which estimates a motion vector for image compensation is a core technique to improve a picture quality of various video processing systems. Generally, the motion estimation operation is performed by using a block matching algorithm.

The block matching algorithm estimates a single motion vector per block by comparing two frames and field images that are input consecutively, by block. The motion vector is estimated by using a motion estimation error, e.g., a sum of absolute difference (SAD), and the estimated motion vector is used to compensate a motion.

The motion estimation is classified into a forward motion estimation which estimates a motion of a current frame based on a previous frame, a backward motion estimation which estimates a motion of a previous frame based on a current frame, and a bidirectional motion estimation which performs both the forward motion estimation and the backward motion estimation. If a motion is compensated by performing a unidirectional motion estimation operation such as the forward motion estimation or the backward motion estimation, halo may arise from an occlusion area like a boundary of an object or errors may occur. Meanwhile, the bidirectional motion estimation operation provides more accurate motion estimation, but adds load to hardware and consumes more memory to calculate data.

Accordingly, it is an aspect of the present invention to provide a motion estimation method of an image and an image processing apparatus which reduces costs and load to hardware.

Also, it is another aspect of the present invention to provide a motion estimation method for an image and an image processing apparatus which acquires an effect of a bidirectional motion estimation operation by using a pseudo motion vector.

Additional aspects and/or advantages of the exemplary embodiments will be set forth in part in the description which follows and, in part, will be obvious from the description, or may be learned by practice of the exemplary embodiments.

The foregoing and/or other aspects are also achieved by providing a motion estimating method of an image, the method including: calculating a candidate motion vector by using one of a forward motion estimation and a backward motion estimation from a reference block extracted from one of first and second images that are input consecutively, and a search area extracted from the other one of the first and second images; calculating a pseudo motion vector corresponding to the other one of the forward motion estimation and the backward motion estimation by using the candidate motion vector; and interpolating the first and second images by using at least one of the candidate motion vector and the pseudo motion vector.

The calculating the pseudo motion vector may include classifying the candidate motion vectors into predetermined groups corresponding to peripheral blocks of the candidate motion vector; and selecting one of centre vectors from the groups, as the pseudo motion vector.

The selecting the pseudo motion vector may include selecting a vector whose value V in a following formula is the largest among the centre vectors, as the pseudo motion vector, in which

$$V_j = w_p(P_j) * w_d(D_j) \qquad\qquad [\text{Formula 1}]$$

$1 \leq j \leq k$, k is the number of the groups; $D_j$ is a distance between the candidate motion vector and the centre vector; $P_j$ is the number of the candidate motion vectors included in the groups with respect to the number of candidate motion vectors corresponding to the peripheral blocks; and $w_p$ and $w_d$ are a weight value and a constant.

The interpolating the first image and the second image may include setting a vector having a smaller sum of absolute difference (SAD) between a SAD corresponding to the candidate motion vector and a SAD corresponding to the pseudo motion vector, as a final motion vector; and generating an interpolated image between the first image and the second image by using the final motion vector.

The interpolating the first image and the second image may include determining a covering area or an uncovering area if a difference between the SAD corresponding to the candidate motion vector and the SAD corresponding to the pseudo motion vector exceeds a predetermined value.

Another aspect is to provide an image processing apparatus including: a candidate motion vector calculator which may calculate a candidate motion vector by using one of a forward motion estimation and a backward motion estimation from a reference block extracted from one of a first image and a second image that are input consecutively,

2

and a search area extracted from the other one of the first image and the second image; a pseudo motion vector calculator which may calculate a pseudo motion vector corresponding to the other one of the forward motion estimation and the backward motion estimation by using the candidate motion vector; and a motion compensator which may interpolate between the first image and the second image by using at least one of the candidate motion vector and the pseudo motion vector.

The above and/or other aspects will become apparent and more readily appreciated from the following description of the embodiments, taken in conjunction with the accompanying drawings of which:

FIG. 1 is a control block diagram of an image processing apparatus according to an exemplary embodiment;
FIG. 2 is a control flowchart which illustrates a motion estimating method of the image processing apparatus in FIG. 1;
FIG. 3 illustrates a motion estimation operation with respect to a direction if an object moves;
FIG. 4 is a control flowchart which illustrates a method of calculating a pseudo motion vector by the image processing apparatus in FIG. 1;
FIG. 5 illustrates peripheral blocks to calculate a pseudo motion vector in the image processing apparatus in FIG. 1; and
FIG. 6 illustrates frame images to describe a motion interpolation operation of the image processing apparatus in FIG. 1.

Hereinafter, exemplary embodiments will be described with reference to accompanying drawings, wherein like numerals refer to like elements and repetitive descriptions will be avoided as necessary.

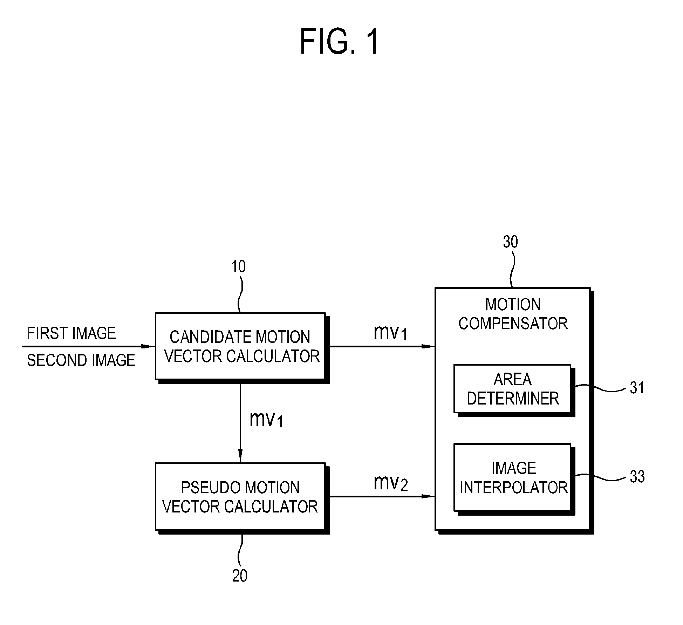

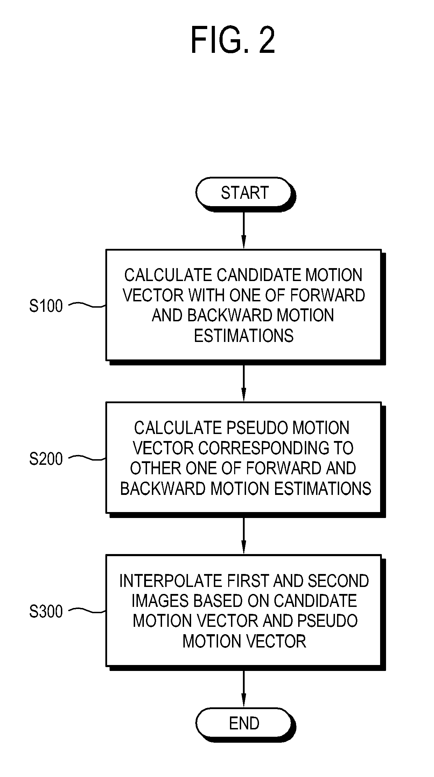

FIG. 1 is a control block diagram of an image processing apparatus according to an exemplary embodiment FIG. 2 is a control flowchart of a motion estimating method of the image processing apparatus in FIG. 1. As shown therein, the image processing apparatus includes a candidate motion vector calculator 10, a pseudo motion vector calculator 20 and a motion compensator 30. The image processing apparatus estimates a motion with a block matching algorithm, and converts a frame rate or interpolates an image by using the motion estimation operation. The block matching algorithm estimates a single motion vector per block by comparing two consecutive input frames or field images by block.

The candidate motion vector calculator 10 calculates a candidate motion vector by using a reference block extracted from one of first and second consecutive images and a search area extracted from the other one of the first and second consecutive images according to one of a forward motion estimation and a backward motion estimation (S100). The first image and the second image may include field images including even line images or odd line images only, and frame images including both even line images and odd line images. The first image and the second image are input consecutively. Assuming that the first image is input prior to the second image, a forward motion estimation is defined as an estimation of a motion of a reference block by searching a search area of the second image with the reference block of the first image. Meanwhile, a backward motion estimation is defined as an estimation of a motion of a reference block by searching a search area of the second image with the reference block of the second image. The search direction is only a relative notion. The candidate motion vector may be estimated by using a motion estimation error, e.g., a sum of absolute difference (SAD). A block which has a smallest SAD in the block within the search area becomes a matching block of the reference block while a vector between the reference block and the matching block is set as the candidate motion vector. The candidate motion vector according to the present exemplary embodiment is named as $mv_1$ to be distinguished from a pseudo motion vector which will be described later.

The pseudo motion vector calculator 20 calculates a pseudo motion vector corresponding to the other one of the forward motion estimation and the backward motion estimation by using the pseudo motion vector $mv_1$ (S200). Hereinafter, the pseudo motion vector will be referred to as $mv_2$.

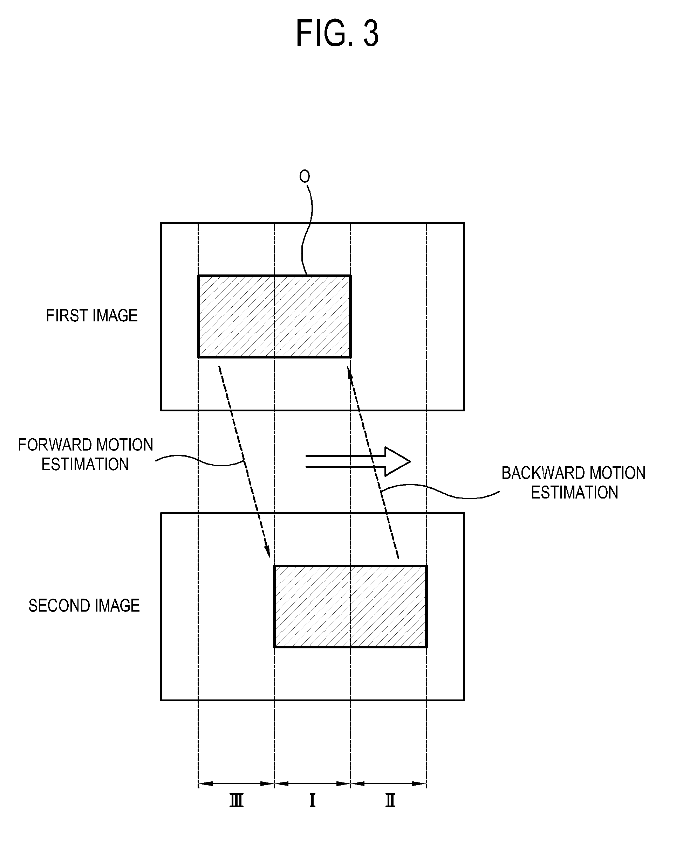

FIG. 3 illustrates a motion estimation operation with respect to a direction when an object moves. As shown therein, if an object O moves through the first and second images, there occur three areas: a first area I where the object O overlaps in the first and second images, a second area II where the object O exists only in the second image which is input following the first image, and a third area III where the object O exists only in the first image input prior to the second image. The first area I enables both the forward motion estimation and the backward motion estimation. The first area I is also referred to as a normal area. The second area II where an existing image (first image) is covered by an object O of a new image (second image) is referred to as a covering area. To that end, the third area III where the existing image (first image) is exposed by a movement of the object O of the new image (second image) is also referred to as an uncovering area. In the covering area II, the backward motion estimation which estimates a motion by searching the first image based on the second image is available, and the forward motion estimation which searches the second image based on the first image is not available. This is because the image corresponding to the covering area II of the first image does not exist in the second image. Conversely, in the uncovering area III, the forward motion estimation which searches the second image based on the first image is available, but the backward motion estimation is not available since the image corresponding to the uncovering area III of the second image does not exist in the first image.

Therefore, it is preferable that both the forward and backward motion estimations are available for an accurate estimation, and the image interpolation is performed by using the motion vector based on the bidirectional motion estimation. The bidirectional motion estimation requires twice logic of a unidirectional motion estimation. Accordingly, load to hardware and a consumption of a memory capacity increase. That is, a larger search area causes more calculation volume, memory bandwidth and internal memory consumption, thereby adding load to hardware.

According to the present exemplary embodiment, a motion estimation operation is performed by using a motion estimation logic with respect to a single particular direction, and a pseudo motion vector $mv_2$ which estimates a motion in an opposite direction is calculated by the pseudo motion vector calculator 20. That is, only a part of hardware logic which is necessary for the bidirectional motion estimation is used to estimate a motion, and a motion vector with respect to the remaining direction is generated by a predetermined calculation to thereby reduce the foregoing issues. For example, if the candidate motion vector calculator 10 calculates the candidate motion vector $mv_1$ through the backward motion estimation, the pseudo motion vector $mv_2$ which is calculated by the pseudo motion vector calculator 20 corresponds to a motion vector which may be obtained from the forward motion vector. In this case, a motion in the uncovering area III where the motion is not estimated by the backward motion estimation may be estimated through the pseudo motion vector $mv_2$.

The motion compensator 30 interpolates between the first image and the second image by using at least one of the candidate motion vector $mv_1$ and the pseudo motion vector $mv_2$ (S300). The motion compensator 30 includes an area determiner 31 which determines the foregoing first to third areas I to III through the received candidate motion vector $mv_1$ and the pseudo motion vector $mv_2$, and an image interpolator 33 which interpolates an image by using the determination result of the area determiner 31, and the candidate motion vector $mv_1$ and the pseudo motion vector $mv_2$. The interpolation of an image may be performed by using either the candidate motion vector $mv_1$ or the pseudo motion vector $mv_2$ or both of them. The method of interpolating the image by using a plurality of vectors or bidirectional motion vectors may include various known methods, without limitation to a particular method.

According to another exemplary embodiment, the motion compensator 30 may additionally receive information on the area instead of determining the covering area and the uncovering area of the image based on the motion vectors $mv_1$ and $mv_2$.

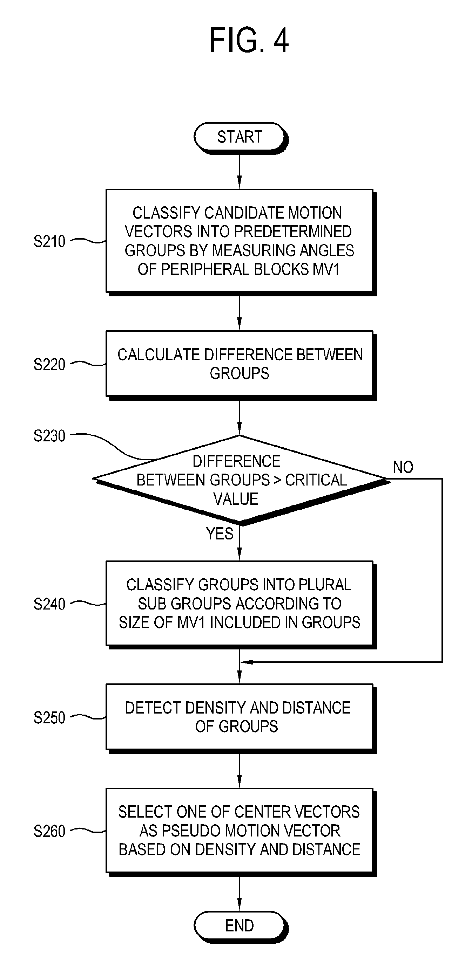

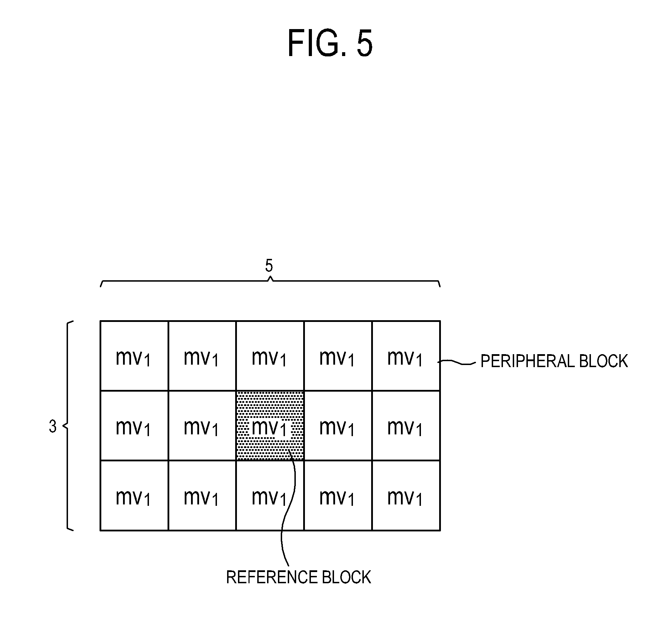

FIG. 4 is a control flowchart which illustrates a method of calculating the pseudo motion vector $mv_2$. FIG. 5 illustrates peripheral blocks to calculate the pseudo motion vector $mv_2$. The calculation of the pseudo motion vector $mv_2$ according to the exemplary embodiment will be described with reference to FIGS. 4 and 5. The pseudo motion vector calculator 20 according to the present exemplary embodiment calculates the pseudo motion vector $mv_2$ by applying clustering techniques using peripheral blocks of a particular reference block.

The pseudo motion vector calculator 20 first measures angles of candidate motion vectors $mv_1$ for the peripheral blocks of a particular reference block, and classifies the candidate motion vectors $mv_1$ into predetermined groups (S210). As shown in FIG. 5, a plurality of blocks which is adjacent to the reference block is set as peripheral blocks. The peripheral blocks according to the present exemplary embodiment are set as 15 blocks including the reference block in a 5x3 basis. The candidate motion vectors $mv_1$ which are estimated from the peripheral blocks are classified into predetermined groups according to angles. The predetermined groups may be classified into four groups based on a quadrant (0 to 90 degrees, 90 to 180 degrees, 180 to 270 degrees and 270 to 360 degrees) by angle or classified into groups whose angles are in a cluster. The number of groups may vary.

The pseudo motion vector calculator 20 calculates a difference between the groups and determines whether the difference exceeds a predetermined critical value (S220 and S230). This operation is performed to determine whether to additionally classify the predetermined groups to classify candidate vectors for calculating the pseudo motion vector $mv_2$ in detail. The critical value may vary depending on the extent of the classification, and is not limited to a particular value.

If the difference between the predetermined groups exceeds the critical value, the predetermined groups are further classified into a plurality of sub groups according to the size of the candidate motion vectors $mv_1$ included in the groups (S240). The predetermined groups may be classified into two or three or more sub groups according to the size of the candidate motion vectors $mv_1$.

If the classification of the groups is finalized, a density and a distance of the groups are detected (S250). The density $P_i$ of the groups means the number of the candidate motion vectors $mv_1$ included in the groups with respect to the number of the candidate motion vectors $mv_1$ corresponding to the peripheral blocks. The distance $D_i$ of the groups means a distance between the candidate motion vector $mv_1$ and centre vectors of the groups. For example, if a first group includes three candidate motion vectors, the density of the first groups is 3/15.

The pseudo motion vector calculator 20 selects one of the centre vectors of the groups, as the pseudo motion vector $mv_2$, based on the detected density $P_i$ and the distance $D_i$ (S260). According to the present exemplary embodiment, a vector whose value V in a following Equation 1 is the largest, is selected as the pseudo motion vector $mv_2$.

$$V_j = w_p(P_j) * w_d(D_j) \qquad\qquad \text{[Equation 1]}$$

in which, $1 \leq j \leq k$, k is the number of the groups, $D_j$ is a distance between the candidate motion vector $mv_1$ of a particular reference block and the centre vector, Pj is the number of the candidate motion vectors $mv_1$ included in the groups with respect to the number of candidate motion vectors $mv_1$ corresponding to the peripheral blocks, and $w_p$ and $w_d$ are a weight value and a constant.

The pseudo motion vector calculator 20 may use another formula or other variables than the density and the distance to find the pseudo motion vector $mv_2$ having a direction opposite to the candidate motion vector $mv_1$. That is, as long as the relation or correlation between the candidate motion vector $mv_1$ and the pseudo motion vector $mv_2$ is shown, any known algorithm or formula may be used.

The motion compensator 30 interpolates between the first image and the second image based on two vectors input from the pseudo motion vector calculator 20 and the candidate motion vector calculator 10. During the foregoing process, the motion compensator 30 sets a vector having a smaller sum of absolute difference (SAD) between the SAD corresponding to the candidate motion vector $mv_1$ and the SAD corresponding to the pseudo motion vector $mv_2$, as a final motion vector, through which an interpolated image is generated.

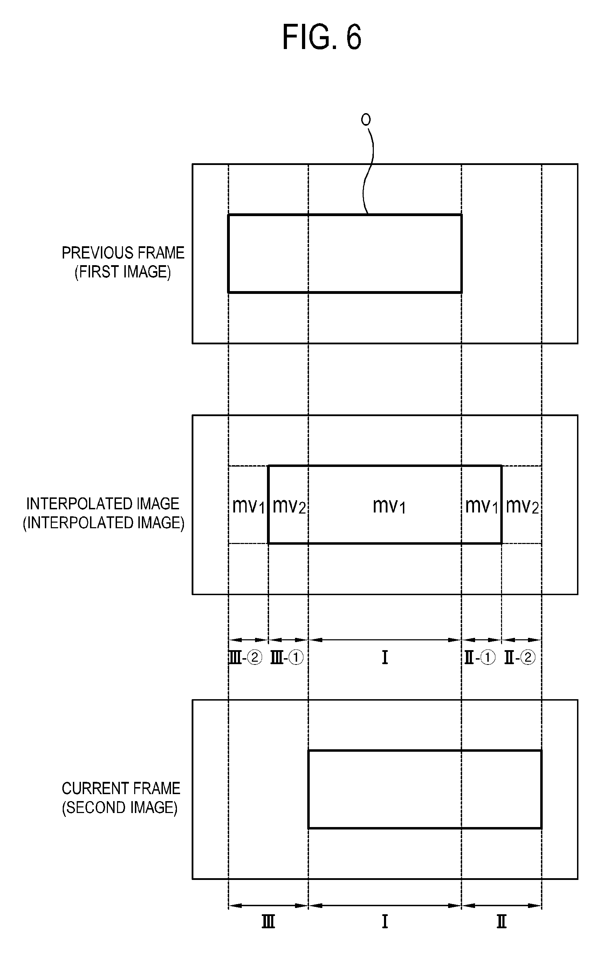

FIG. 6 illustrates frame images to describe an image interpolation of the motion compensator 30. As shown therein, an object O of a previous frame corresponding the first image moves to the right from the current frame corresponding to the second image. If an interpolated frame as an interpolated image is generated on the basis of the bidirectional motion estimation vectors, the motion compensator 30 may interpolate the image by using one of a motion vector of a previous frame and a motion vector of a current frame corresponding to an area to be interpolated. According to the present exemplary embodiment, a vector corresponding to a motion vector of the current frame is a candidate motion vector $mv_1$, for which the backward motion estimation is performed. And a vector corresponding to a motion vector of the previous frame is a pseudo motion vector $mv_2$, for which the forward motion estimation is performed. The bidirectional motion estimation may be performed in the first area I, and the difference of the SAD between the candidate motion vector $mv_1$ and the pseudo motion vector $mv_2$ is not great. Accordingly, the image in the first area I is interpolated on the basis of the candidate motion vector $mv_1$.

As for an interpolation in the covering area II, in a first sub covering area II-①, where image information on the object O is found from the previous frame, a SAD corresponding to the candidate motion vector $mv_1$ resulting from the backward motion estimation may be smaller than a SAD corresponding to the pseudo motion vector $mv_2$. Accordingly, in the first sub covering area II-①, the image is interpolated on the basis of the candidate motion vector $mv_1$. Conversely, in a second sub covering area II-② where image information on the object O is not found from the previous frame, a SAD corresponding to the pseudo motion vector $mv_2$ resulting from the forward motion estimation may be smaller than a SAD corresponding to the candidate motion vector $mv_1$. That is, in the second sub covering area Is-②, the image is interpolated on the basis of the pseudo motion vector $mv_2$.

As for an interpolation in the uncovering area III, in a first sub uncovering area III-① where image information on a background is not found from the previous frame, a SAD corresponding to the pseudo motion vector $mv_2$ is smaller than a SAD corresponding to the candidate motion vector $mv_1$. Meanwhile, in a second sub uncovering area III-② where image information on the background is found from the previous frame, the image may be interpolated by using the candidate motion vector $mv_1$.

In sum, the motion compensator 30 may compare the SAD of two vectors to determine which area is the normal area I, the covering area II or the uncovering area III. If the SAD of each vector exceeds a predetermined value, i.e., if it is determined that the difference of SAD between the two vectors is larger than a particular standard, the area is determined to be the covering area II or the uncovering area III. The image in the area which is determined to be the covering area II or the uncovering area III may be interpolated by the motion vector having a smaller SAD. The interpolation of the image by the motion compensator 30 using the forward motion vector $mv_1$ and the backward motion vector $mv_2$ is known in the art, and any method can be applied in the exemplary embodiment.

As described above, the exemplary embodiments interpolate an image by using the bidirectional motion estimation, and performs one of the forward motion estimation and the backward motion estimation and then calculates the motion vector with respect to the other one of the forward motion estimation and the backward motion estimation. This reduces load to hardware while ensuring as accurate motion estimation as that with the bidirectional motion estimation.

As described above, a motion estimating method of an image and an image processing apparatus according to the exemplary embodiments reduce costs and load to hardware.

Further, the motion estimating method of an image and the image processing apparatus according to the exemplary embodiments acquire an effect of a bidirectional motion estimation through a pseudo motion vector.

Although a few exemplary embodiments have been shown and described, it will be appreciated by those skilled in the art that changes may be made in these exemplary embodiments without departing from the principles of the invention, the scope of which is defined in the appended claims.

**Claims**

1. A motion estimating method of an image, the method comprising:

   calculating a candidate motion vector by using one of a forward motion estimation and a backward motion estimation from a reference block extracted from one of a first image and a second image that are input consecutively, and a search area extracted from another of the first and the second images;
   calculating a pseudo motion vector corresponding to the other of the forward motion estimation and the backward motion estimation by using the candidate motion vector; and
   interpolating between the first and the second images by using at least one of the candidate motion vector and the pseudo motion vector.

2. The method according to claim 1, wherein the calculating the pseudo motion vector comprises:

   classifying the candidate motion vector into one of predetermined groups corresponding to peripheral blocks of the candidate motion vector; and
   selecting one of centre vectors from the predetermined groups, as the pseudo motion vector.

3. The method according to claim 2, wherein the selecting the one of centre vectors from the predetermined groups, as the pseudo motion vector comprises selecting a vector whose value V in a following formula is a largest among the centre vectors, as the pseudo motion vector, in which

$$V_j = w_p(P_j) * w_d(D_j)$$

   $1 \leq j \leq k$, k is a number of the predetermined groups; $D_j$ is a distance between the candidate motion vector and the centre vector; $P_j$ is a number of the candidate motion vectors included in the predetermined groups with respect to the number of candidate motion vectors corresponding to the peripheral blocks; and $w_p$ and $w_d$ are a weight value and a constant, respectively.

4. The method according to claim 1, wherein the interpolating between the first image and the second image comprises:

   setting a vector having a smaller sum of absolute difference (SAD) between a SAD corresponding to the candidate motion vector and a SAD corresponding to the pseudo motion vector, as a final motion vector; and
   generating an interpolated image between the first image and the second image by using the final motion vector.

5. The method according to claim 1, wherein the interpolating between the first image and the second image comprises determining a covering area or an uncovering area if a difference between the SAD corresponding to the candidate motion vector and the SAD corresponding to the pseudo motion vector exceeds a predetermined value.

6. An image processing apparatus comprising:

   a candidate motion vector calculator which calculates a candidate motion vector by using one of a forward motion estimation and a backward motion estimation from a reference block extracted from one of a first image and a second image that are input consecutively, and a search area extracted from another of the first image and the second image;
   a pseudo motion vector calculator which calculates a pseudo motion vector corresponding to the other of the forward motion estimation and the backward motion estimation by using the candidate motion vector; and
   a motion compensator which interpolates between the first image and the second image by using at least one of the candidate motion vector and the pseudo motion vector.

7. The image processing apparatus according to claim 6, wherein the pseudo motion vector calculator classifies the candidate motion vector corresponding to peripheral blocks of the candidate motion vector, as predetermined groups, and selects one of centre vectors from the predetermined groups as the pseudo motion vector.

8. The image processing apparatus according to claim 7, wherein the pseudo motion vector calculator selects a vector whose value V in a following formula is a largest among the centre vectors, as the pseudo motion vector, in which

$$V_j = w_p(P_j) * w_d(D_j)$$

$1 \leq j \leq k$, k is a number of the predetermind groups; $D_j$ is a distance between the candidate motion vector and the centre vector; $P_j$ is a number of the candidate motion vectors included in the predetermined groups with respect to the number of candidate motion vectors corresponding to the peripheral blocks; and $w_p$ and $w_d$ are a weight value and a constant, respectively.

9. The image processing apparatus according to claim 6, wherein the motion compensator sets a vector having a smaller sum of absolute difference (SAD) between a SAD corresponding to the candidate motion vector and a SAD corresponding to the pseudo motion vector, as a final motion vector, and generates an interpolated image between the first image and the second image by using the final motion vector.

10. The image processing apparatus according to claim 6, wherein the motion compensator determines a covering area or an uncovering area if a difference between the SAD corresponding to the candidate motion vector and the SAD corresponding to the pseudo motion vector exceeds a predetermined value.

# FIG. 1

FIRST IMAGE
SECOND IMAGE

10

CANDIDATE MOTION
VECTOR CALCULATOR

$mv_1$

$mv_1$

PSEUDO MOTION
VECTOR CALCULATOR

20

$mv_2$

30

MOTION
COMPENSATOR

AREA
DETERMINER

31

IMAGE
INTERPOLATOR

33

# FIG. 2

START

S100 — CALCULATE CANDIDATE MOTION VECTOR WITH ONE OF FORWARD AND BACKWARD MOTION ESTIMATIONS

S200 — CALCULATE PSEUDO MOTION VECTOR CORRESPONDING TO OTHER ONE OF FORWARD AND BACKWARD MOTION ESTIMATIONS

S300 — INTERPOLATE FIRST AND SECOND IMAGES BASED ON CANDIDATE MOTION VECTOR AND PSEUDO MOTION VECTOR

END

# FIG. 3

O

FIRST IMAGE

FORWARD MOTION
ESTIMATION

BACKWARD MOTION
ESTIMATION

SECOND IMAGE

III     I     II

# FIG. 4

START

S210 — CLASSIFY CANDIDATE MOTION VECTORS INTO PREDETERMINED GROUPS BY MEASURING ANGLES OF PERIPHERAL BLOCKS MV1

S220 — CALCULATE DIFFERENCE BETWEEN GROUPS

S230 — DIFFERENCE BETWEEN GROUPS > CRITICAL VALUE

NO

YES

S240 — CLASSIFY GROUPS INTO PLURAL SUB GROUPS ACCORDING TO SIZE OF MV1 INCLUDED IN GROUPS

S250 — DETECT DENSITY AND DISTANCE OF GROUPS

S260 — SELECT ONE OF CENTER VECTORS AS PSEUDO MOTION VECTOR BASED ON DENSITY AND DISTANCE

END

# FIG. 5

REFERENCE BLOCK

# FIG. 6

PREVIOUS FRAME
(FIRST IMAGE)

INTERPOLATED IMAGE
(INTERPOLATED IMAGE)

$mv_1$ $mv_2$    $mv_1$    $mv_1$ $mv_2$

Ⅲ-②   Ⅲ-①     Ⅰ     Ⅱ-①   Ⅱ-②

CURRENT FRAME
(SECOND IMAGE)

Ⅲ     Ⅰ     Ⅱ

Europäisches
Patentamt

European
Patent Office

Office européen
des brevets

## EUROPEAN SEARCH REPORT

Application Number

EP 10 16 4380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU R ET AL: "Side Information Generation Based on Hierarchical Motion Estimation in Distributed Video Coding" CHINESE JOURNAL OF AERONAUTICS,, vol. 22, no. 2, 1 April 2009 (2009-04-01), pages 167-173, XP026022378 ISSN: 1000-9361 [retrieved on 2009-04-01] | 1,4-6,9, 10 | INV. G06T7/20 H04N7/01 H04N7/26 |
| Y | * section 3 * | 2,7 | |
| A | | 3,8 | |
| X | US 5 777 682 A (DE HAAN GERARD [NL] ET AL) 7 July 1998 (1998-07-07) | 1,6 | |
| Y | * figure 1 * | 2,7 | |
| A | * column 2 * | 3,8 | |
| Y | US 2009/060042 A1 (LERTRATTANAPANICH SURAPONG [US] ET AL) 5 March 2009 (2009-03-05) | 2,7 | |
| A | * page 2 - page 4 * * figures 1-6 * | 3,8 | TECHNICAL FIELDS SEARCHED (IPC) |
| A | WO 2004/039074 A1 (KONINKL PHILIPS ELECTRONICS NV [NL]; DE HAAN GERARD [NL]; BIEZEN PAUL) 6 May 2004 (2004-05-06) * the whole document * | 1-10 | G06T H04N |

The present search report has been drawn up for all claims

| Place of search | Date of completion of the search | Examiner |
|---|---|---|
| Munich | 23 September 2010 | Katartzis, Antonios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 16 4380

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2010

| Patent document cited in search report | | Publication date | Patent family member(s) | | Publication date |
|---|---|---|---|---|---|
| US 5777682 | A | 07-07-1998 | DE | 69602818 D1 | 15-07-1999 |
| | | | DE | 69602818 T2 | 16-12-1999 |
| | | | WO | 9628931 A2 | 19-09-1996 |
| | | | JP | 3916661 B2 | 16-05-2007 |
| | | | JP | 10500831 T | 20-01-1998 |
| US 2009060042 | A1 | 05-03-2009 | NONE | | |
| WO 2004039074 | A1 | 06-05-2004 | AU | 2003265075 A1 | 13-05-2004 |
| | | | CN | 1706189 A | 07-12-2005 |
| | | | JP | 2006504175 T | 02-02-2006 |
| | | | KR | 20050061556 A | 22-06-2005 |
| | | | US | 2006045365 A1 | 02-03-2006 |

EPO FORM P0459

For more details about this annex : see Official Journal of the European Patent Office, No. 12/82